# DEMANDE DE BREVET EUROPEEN

(11) **EP 0 619 071 A1**
(43) Date de publication de la demande: **12.10.1994**
(21) Numéro de dépôt: 94400741.8
(22) Date de dépôt: 06.04.1994
(51) Int. Cl.: A01K 89/016

(54) **Moulinet de pêche à la mouche**

(30) Priorité: 08.04.1993 FR 9304178
(71) Demandeur: Pinvidic, Jacques, F-13090 Aix en Provence (FR)
(72) Inventeur: Pinvidic, Jacques, F-13090 Aix en Provence (FR)
(74) Mandataire: Ramey, Daniel

(57) **Abrégé**

Moulinet de pêche à la mouche, du type "horizontal" et comprenant une bobine (20) de réception de fil montée à rotation dans un boîtier (12), et entraî- née par un engrenage démultiplicateur commandé par un levier (60) monté pivotant sur le fond du boîtier (12) autour d'un axe (62) perpendiculaire à l'axe de rotation de la bobine (20), ce levier (60) s'étendant le long du manche (10) d'une canne à pêche.

## Description

L'invention concerne un moulinet de pêche à la mouche, comprenant une bobine de réception de fil montée rotative autour d'un axe dans un boîtier et des moyens d'entraînement unidirectionnel de la bobine en rotation, comportant un mécanisme de roue libre ou analogue autorisant la rotation libre de la bobine dans un sens, sa rotation dans l'autre sens étant commandée par les moyens d'entraînement précités.

La pêche à la mouche impose l'enroulement et le déroulement de longueurs assez importantes de fil et les moulinets utilisés doivent permettre le déroulement facile du fil par traction sur le fil en sortie du moulinet, et l'enroulement rapide du fil par action sur un levier ou un autre moyen d'entraînement de la bobine en rotation dans le sens approprié.

Les moulinets connus de pêche à la mouche sont soit du type automatique comportant un moteur électrique ou à ressort pour l'entraînement du fil et sont alors coûteux, lourds et relativement fragiles, soit sont du type à actionnement manuel au moyen d'un levier du type renvoi de sonnette, mais sont alors relativement bruyants et ne permettent pas un enroulement rapide du fil.

De plus, les moulinets à commande manuelle sont souvent du type "vertical", c'est-à-dire que le moulinet est fixé sur la canne à pêche de telle sorte que le plan de rotation de la bobine contienne l'axe de la canne à pêche, l'axe de rotation de la bobine étant horizontal et perpendiculaire à la canne à pêche. Ce type de moulinet présente l'inconvénient qu'une traction exercée sur le fil pour le dérouler tend à faire tourner la canne à pêche dans la main du pêcheur et impose un changement de direction assez important du fil (qui est fragile), ce qui amène souvent le pêcheur à plier le poignet pour accompagner les mouvements de traction sur le fil.

Il existe des moulinets de type "horizontal", dans lesquels l'axe de rotation de la bobine est sensiblement perpendiculaire par rapport à l'axe de la canne et passe par cet axe, le plan de rotation de la bobine étant parallèle à l'axe de la canne à pêche et étant sensiblement horizontal lorsque la canne à pêche est tenue horizontalement.

Ce type de moulinet peut être utilisé de la même façon par un droitier et par un gaucher, et le fil peut être déroulé plus facilement. Cependant, dans les moulinets connus de ce type, les leviers d'actionnement des moyens d'entraînement de la bobine en rotation pour l'enroulement du fil sont peu commodes à utiliser, et l'enroulement du fil est relativement lent. Ils sont aussi assez bruyants.

La présente invention a pour objet un moulinet de pêche à la mouche, du type "horizontal" à commande manuelle, qui ne présente pas les inconvénients précités.

Elle a également pour objet un moulinet de ce type, qui soit peu coûteux, silencieux et particulièrement fiable.

Elle a encore pour objet un moulinet de ce type, dont le montage, le démontage et le réglage sont extrêmement simples et rapides.

Elle propose à cet effet un moulinet de pêche à la mouche, comprenant une bobine de réception de fil montée rotative autour d'un axe dans un boîtier, des moyens à levier d'entraînement unidirectionnel de la bobine en rotation, et des moyens de fixation du boîtier sur une canne à pêche dans une position telle que le plan de rotation de la bobine est "horizontal" et sensiblement parallèle à la canne, caractérisé en ce que le levier d'actionnement est monté sur le boîtier autour d'un axe perpendiculaire à l'axe de rotation de la bobine.

De préférence, le levier s'étend sensiblement le long de la canne.

Ce moulinet peut donc être utilisé exactement comme un moulinet de type "vertical", l'enroulement d'une longueur de fil étant provoqué par un mouvement naturel d'un doigt posé sur le levier que l'on fait pivoter en le rapprochant de la canne. De plus, ce moulinet est utilisable de la même façon par un droitier ou un gaucher.

Selon une autre caractéristique de l'invention, ce levier comprend une extrémité s'étendant à l'intérieur du boîtier, sensiblement parallèlement à l'axe de rotation de la bobine.

Cette extrémité du levier porte une poulie sur laquelle passe un câble d'entraînement d'un engrenage de démultiplication en prise avec une roue dentée d'entraînement de la bobine, les extrémités du câble étant fixées au boîtier.

Dans un mode de réalisation, le câble passe sur une poulie faisant partie dudit engrenage et est fixé en un point de la périphérie de cette poulie.

Dans un autre mode de réalisation, le levier précité coopère avec un bras à secteur denté, monté pivotant dans le boîtier autour d'un axe parallèle à l'axe de rotation de la bobine et associé à un ressort de rappel, le secteur denté étant en prise avec une roue dentée d'un engrenage démultiplicateur d'entraînement de la bobine en rotation.

L'invention permet ainsi une adaptation simple des mécanismes d'entraînement qui ont été conçus pour des moulinets du type "vertical", ces mécanismes pouvant être utilisés pratiquement sans modification dans le moulinet "horizontal" selon l'invention.

Selon encore une autre caractéristique de l'invention, la bobine est portée par un manchon tubulaire enfilé sur une tige cylindrique solidaire du fond du boîtier et maintenu axialement par clipsage ou encliquetage élastique sur cette tige, des moyens à poussoir étant prévus pour le déclipsage ou désencliquetage du manchon.

Il en résulte une grande commodité de montage et de démontage de la bobine dans le boîtier du moulinet.

Selon encore une autre caractéristique de l'invention, la bobine porte une rondelle axiale de freinage en appui élastique à frottement doux sur une rondelle correspondante portée par un élément de l'engrenage de démultiplication, et des moyens à vissage de réglage de la force de freinage de la bobine.

On peut ainsi très facilement régler la force de traction qu'il faut appliquer au fil pour le dérouler. De plus, le déroulement du fil est silencieux et se traduit uniquement par le frottement doux de deux rondelles en appui élastique l'une sur l'autre.

De façon générale, le moulinet selon l'invention présente l'avantage d'être simple, peu coûteux et particulièrement commode à utiliser.

L'invention sera mieux comprise et d'autres caractéristiques, détails et avantages de celle-ci apparaitront plus clairement à la lecture de la description qui suit, faite en référence aux dessins annexés dans lesquels :
la figure 1 est une vue schématique en coupe axiale d'un moulinet selon l'invention;
la figure 2 est une vue de face de ce moulinet, la bobine étant retirée;
la figure 3 est une vue partielle d'une variante de réalisation;
les figures 4 et 5 sont des vues partielles de face et en coupe d'un mécanisme de roue libre;
les figures 6 et 7 sont des vues partielles de face et en coupe d'un autre mécanisme de roue libre;
la figure 8 est une vue schématique de face d'un autre mode de réalisation de l'invention.

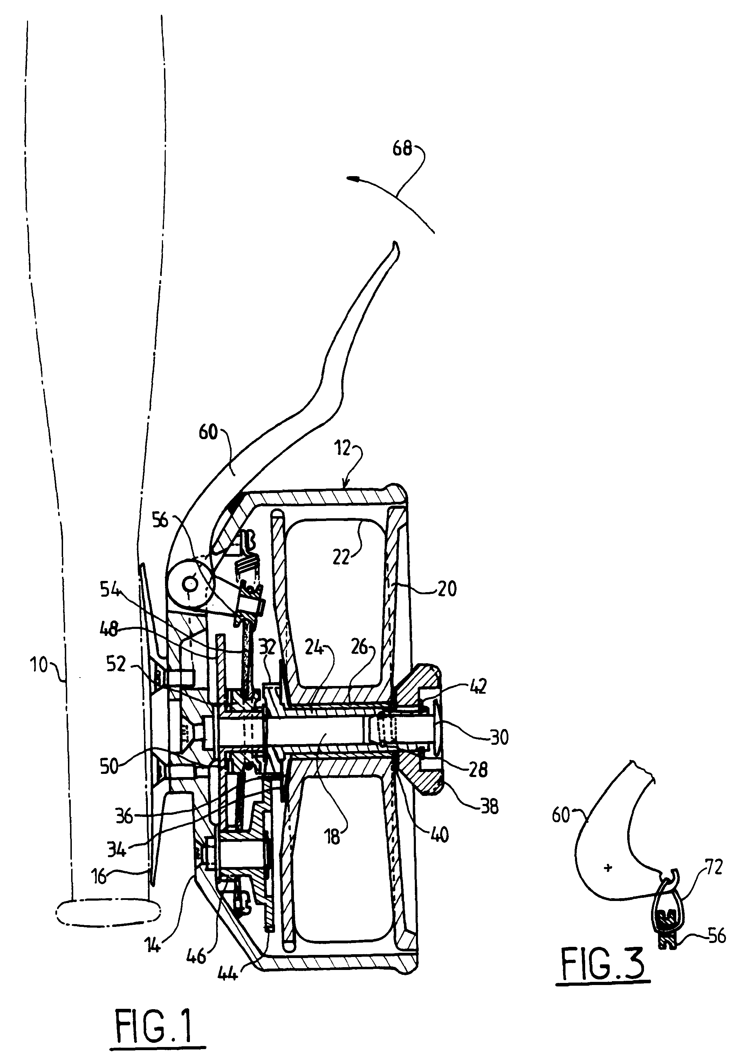

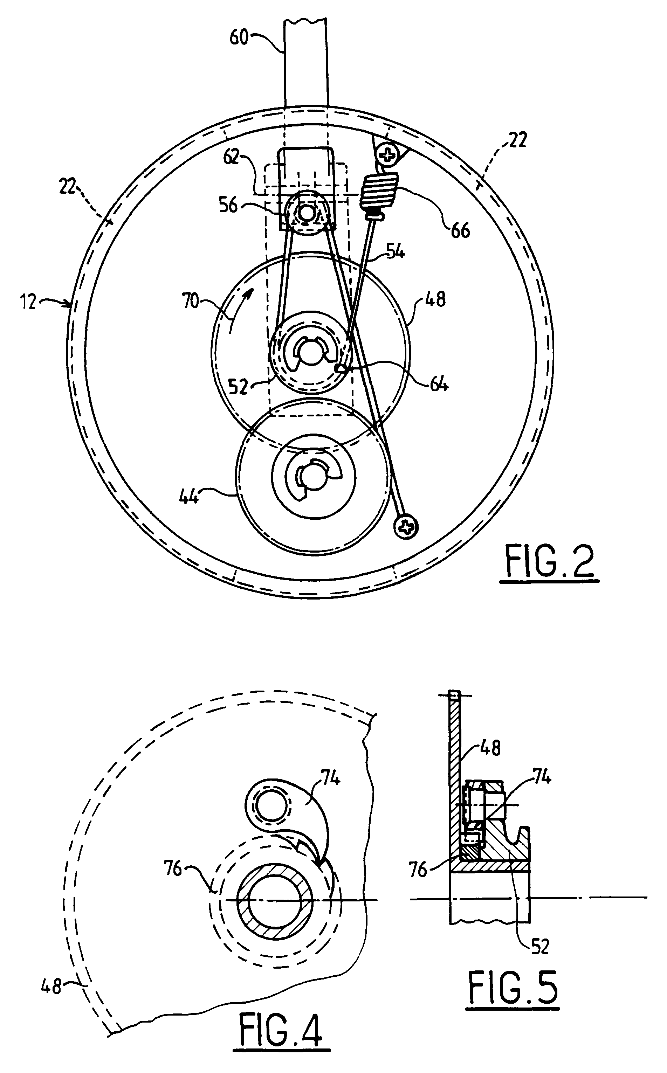

On fera d'abord référence aux figures 1 et 2 pour décrire un premier mode de réalisation d'un moulinet de pêche à la mouche selon l'invention.

En figure 1, le moulinet est représenté en coupe axiale, dans sa position de montage sur une canne à pêche dont le manche 10 est dessiné en trait fantôme.

Le moulinet comprend un boîtier 12 de forme générale cylindrique comportant un fond 14 sur lequel est fixée par vissage une patte 16 de montage sur le manche 10 de la canne à pêche.

Le fond 14 du boîtier porte également une tige cylindrique axiale 18 sur laquelle est enfilée une bobine 20 de réception de fil, la paroi périphérique du boîtier 12 comportant deux grandes ouvertures ou fenêtres 22 permettant la sortie du fil à gauche ou à droite selon que le moulinet est utilisé par un droitier ou un gaucher.

La bobine 20 est montée sur un manchon 24 par l'intermédiaire d'une bague en bronze 26 ou analogue, le manchon 24 étant enfilé sur la tige 18 et maintenu axialement sur celle-ci par clipsage ou encliquetage élastique au moyen d'un jonc 28 engagé en partie dans une gorge annulaire de la tige 18 et en partie dans une gorge annulaire interne du manchon 24. L'extrémité de la tige 18 est fendue longitudinalement pour recevoir un poussoir 30 faisant saillie à l'extérieur du moulinet. L'extrémité du poussoir 30 introduite dans la fente de la tige 18 présente deux découpes latérales en V dans lesquelles s'engage normalement le jonc 28. En déplaçant le poussoir 30 vers l'intérieur du moulinet, on augmente le diamètre du jonc 28 qui sort alors de la gorge annulaire de la tige 18 et on peut sortir du moulinet l'ensemble manchon 24 - bobine 20.

L'extrémité interne du manchon 24 porte une roue dentée 32 faisant partie de l'engrenage démultiplicateur des moyens d'entraînement de la bobine en rotation, et une rondelle 34 sur laquelle est appliquée une rondelle correspondante 36 portée par la bobine 20. Les matières des deux rondelles 34 et 36 sont choisies pour obtenir un freinage par frottement doux lorsque la bobine 20 tourne par rapport au manchon 24. La force d'appui élastique des rondelles 34 et 36 l'une sur l'autre est réglable au moyen d'un écrou 38 vissé sur l'extrémité extérieur filetée du manchon 24 et prenant appui sur la bobine 20 pour la pousser en direction de la rondelle 34. Une rondelle 40 de matière à frottement doux est montée sur le manchon 34 entre l'écrou 38 et la bobine 20 et est solidaire en rotation du manchon 24, de telle sorte que la rotation de la bobine 20 sur le manchon n'entraîne pas une rotation de l'écrou 38. Ce dernier est d'autre part monté de façon imperdable sur l'extrémité du manchon 24, au moyen d'un circlip ou anneau fendu 42.

La roue dentée 32 portée par l'extrémité interne du manchon 24 est en prise avec une roue dentée 44 montée à rotation sur le fond du boîtier 12 de façon excentrée par rapport à la tige 18, cette roue dentée 44 étant solidaire en rotation d'un pignon coaxial 46 lui-même en prise avec une roue dentée 48 montée à rotation sur la tige 18 précitée.

Sur une face de cette roue dentée 48 est formée une couronne de dents couchées 50 qui sont en prise avec des dents semblables d'une couronne formée sur une face d'une poulie 52 montée à rotation autour de l'axe de la tige 18 et sollicitée axialement en appui élastique sur la roue dentée 48, les deux couronnes dentées précitées formant un mécanisme à crabot d'entraînement unidirectionnel en rotation.

Un câble 54 dont les extrémités sont fixées à l'intérieur du boîtier 12 passe dans la gorge annulaire de la poulie 52 et dans la gorge annulaire d'une poulie 56 portée par l'extrémité d'un levier coudé 60 monté pivotant sur le fond du boîtier 12 autour d'un axe 62 perpendiculaire à l'axe de rotation de la bobine 20 et à la direction axiale du manche 10 de la canne.

Le câble 54 est fixé en 64 dans la gorge de la poulie 52 pour ne pas glisser à l'intérieur de celle-ci et l'une de ses extrémités est fixée à l'intérieur du boîtier par l'intermédiaire d'un ressort de tension 66.

Comme on le voit bien en figure 1, le levier 60 s'étend vers le haut et le long du manche 10 de la canne.

Ainsi, lorsqu'une personne tient le manche 10 de la canne dans sa main gauche ou dans sa main droite, elle peut appliquer un doigt sur la partie supérieure du levier 60 pour le faire pivoter autour de l'axe 62 dans le sens indiqué par la flèche 68. Ce pivotement du levier 60 se traduit par une rotation de la poulie 52 dans le sens indiqué par la flèche 70 en figure 2. Cette rotation est transmise par le mécanisme à crabot à la roue dentée 48 dont la rotation autour de la tige 18 est transmise avec un effet de démultiplication à la roue dentée 32 du manchon 24 par l'intermédiaire du pignon 46 de la roue dentée 44. La bobine 22 est ainsi entraînée en rotation dans le sens correspondant à l'enroulement du fil. Par effet d'inertie, la bobine 20 continue à tourner après que le levier 60 ait été amené en bout de course.

La démultiplication des moyens d'entraînement représentés dans les figures 1 et 2 et l'inertie de la bobine sont telles qu'une rotation de la poulie 52 sur un demi-tour environ permet d'enrouler plusieurs mètres de fil sur la bobine 20.

Comme on l'a représenté schématiquement en figure 3, la poulie 56 associée au levier 60 peut être accrochée à ce dernier par un anneau 72, au lieu d'être montée rotative sur l'extrémité de ce levier.

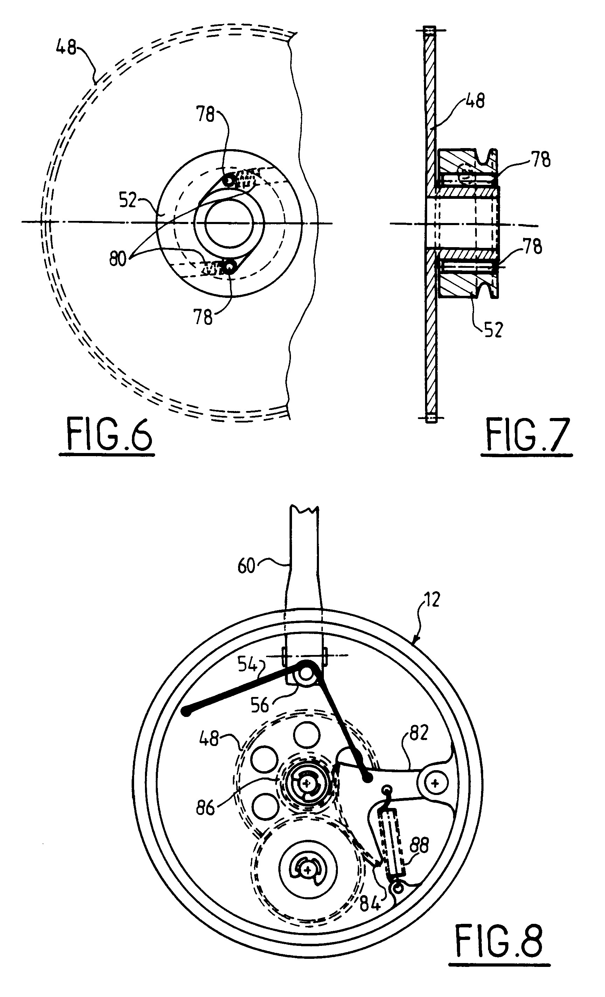

Aux figures 4 et 5, on a représenté une variante de réalisation du mécanisme de roue libre, ce mécanisme étant constitué non plus par un système de crabot, mais par une roue à cliquet. Dans ce cas, le cliquet 74 est porté par la poulie 52 et s'engage entre les dents couchées d'une roue 76 solidaire de la roue dentée 48.

Dans la variante de réalisation des figures 6 et 7, le mécanisme de roue libre est constitué par un roulement à billes ou à aiguilles 78 sollicitées par des ressorts 80. Cette dernière variante de réalisation offre l'avantage d'un fonctionnement totalement silencieux.

Dans la variante de réalisation de la figure 8, le câble 54 qui passe sur la poulie 56 portée par le levier 60, est fixé par une extrémité sur le boîtier 12 et par son autre extrémité sur un bras 82 monté pivotant sur le boîtier autour d'un axe parallèle à l'axe de rotation de la bobine et comportant un secteur denté 84 en prise avec un pignon 86 remplaçant la poulie 52 des modes de réalisation précédemment décrits. Un ressort de rappel 88 est monté entre le boîtier 12 et le bras 82.

Dans ce cas, le pivotement du levier 60 se traduit par la rotation du bras 82 autour de son axe à l'encontre de l'action exercée par le ressort de rappel 88, et donc par la mise en rotation du pignon 86 qui entraîne la roue dentée 48 par l'intermédiaire d'un mécanisme d'entraînement unidirectionnel à roue libre ou analogue, du même type que ceux déjà décrits ci-dessus.

Dans une variante non représentée, le levier 60 pourrait être relié mécaniquement au bras 82, le câble 54 étant alors supprimé.

Dans une autre variante non représentée, le levier 60 pourrait être remplacé par un câble de traction enroulé sur la poulie 52, ce câble de traction pouvant être constitué par le câble 54 précité.

## Revendications

1. Moulinet de pêche à la mouche, comprenant une bobine (20) de réception de fil montée rotative autour d'un axe dans un boîtier (12), des moyens à levier (60) d'entraînement unidirectionnel de la bobine en rotation, et des moyens (16) de fixation du boîtier sur une canne à pêche dans une position telle que le plan de rotation de la bobine est "horizontal" et sensiblement perpendiculaire à la canne, caractérisé en ce que le levier d'actionnement (60) est monté pivotant sur le boîtier (12) autour d'un axe (62) perpendiculaire à l'axe de rotation de la bobine (20).

2. Moulinet selon la revendication 1, caractérisé en ce que le levier (60) s'étend sensiblement le long de la canne.

3. Moulinet selon la revendication 1 ou 2, caractérisé en ce que le levier (60) est monté pivotant sur le fond (14) du boîtier.

4. Moulinet selon l'une des revendications précédentes, caractérisé en ce que le levier comprend une extrémité s'étendant à l'intérieur du boîtier (12), sensiblement parallèlement à l'axe de rotation de la bobine (20).

5. Moulinet selon la revendication 4, caractérisé en ce que cette extrémité du levier (60) porte une poulie (56) sur laquelle passe un câble (54) d'entraînement d'un engrenage de démultiplication en prise avec une roue dentée (32) d'entraînement de la bobine, les extrémités du câble (54) étant fixées au boîtier (12).

6. Moulinet selon la revendication 5, caractérisé en ce que le câble (54) passe sur une poulie (52) faisant partie des moyens d'entraînement précités et est fixé en un point (64) de la périphérie de cette poulie.

7. Moulinet selon l'une des revendications 1 à 5, caractérisé en ce que le levier (60) précité coopère avec un bras (82) à secteur denté (84), monté pivotant dans le boîtier (12) autour d'un axe parallèle à l'axe de rotation de la bobine et associé à un ressort de rappel (88), le secteur denté (84) précité étant en prise avec un pignon (86) d'un engrenage démultiplicateur d'entraînement de la bobine en rotation.

8. Moulinet selon l'une des revendications précédentes, caractérisé en ce que la bobine (20) est portée par un manchon (24) enfilé sur une tige cylindrique (18) fixée sur le fond du boîtier (12) et maintenu axialement par clipsage ou encliquetage élastique sur cette tige, des moyens à poussoir (30) étant prévus pour le déclipsage ou désencliquetage du manchon (24).

9. Moulinet selon l'une des revendications précédentes, caractérisé en ce que la bobine (20) porte une rondelle (36) de freinage en appui élastique à frottement doux sur une rondelle (34) correspondante portée par un élément (32) des moyens d'entraînement en rotation, et des moyens à vissage (38) de réglage de la force de freinage de la bobine.
